# FASCICULE DE BREVET EUROPEEN

(11) **EP 0 658 697 B1**
(45) Date de publication et mention de la délivrance du brevet: **17.05.2000**
(21) Numéro de dépôt: 94410101.3
(22) Date de dépôt: 16.11.1994
(51) Int. Cl.: F16D 41/06, B25J 17/02

(54) **Roue libre débrayable**
Entkuppelbarer Freilauf
Disconnectable freewheel

(30) Priorité: 19.11.1993 FR 9314200
(43) Date de publication de la demande: 21.06.1995
(73) Titulaire: UNIVERSITE JOSEPH FOURIER, F-38041 Grenoble Cédex (FR)
(72) Inventeur: Troccaz, Jocelyne, F-38320 Eybens (FR)
(74) Mandataire: de Beaumont, Michel

(56) Documents cités:
- DE-A- 2 506 428
- DE-U- 8 913 924
- FR-A- 2 251 997
- FR-A- 2 691 093
- US-A- 3 801 990

## Description

La présente invention concerne une roue libre, c'est-à-dire un élément d'accouplement de deux pièces mécaniques permettant à ces deux pièces d'avoir un mouvement relatif de rotation dans un seul sens.

La présente invention vise plus particulièrement une roue libre débrayable qui, selon l'état actif ou inactif d'un signal de commande, permet aux deux pièces de tourner l'une par rapport à l'autre dans les deux sens ou bien dans seulement le sens déterminé par la roue libre, ci-après le sens "libre".

Une application particulièrement intéressante d'une roue libre débrayable apparaît dans la demande de brevet français 2 691 093 (déposée le 12 Mai 1992) qui traite d'un robot chirurgical de guidage de gestes. Dans un tel robot, chaque articulation doit pouvoir être bloquée, tourner librement dans deux sens, ou tourner seulement dans l'un ou l'autre des deux sens. Ces quatre états possibles d'une articulation sont déterminés par deux signaux logiques de commande. Pour obtenir ces quatre états d'une articulation, on utilise deux roues libres débrayables coaxiales et à sens libres opposés.

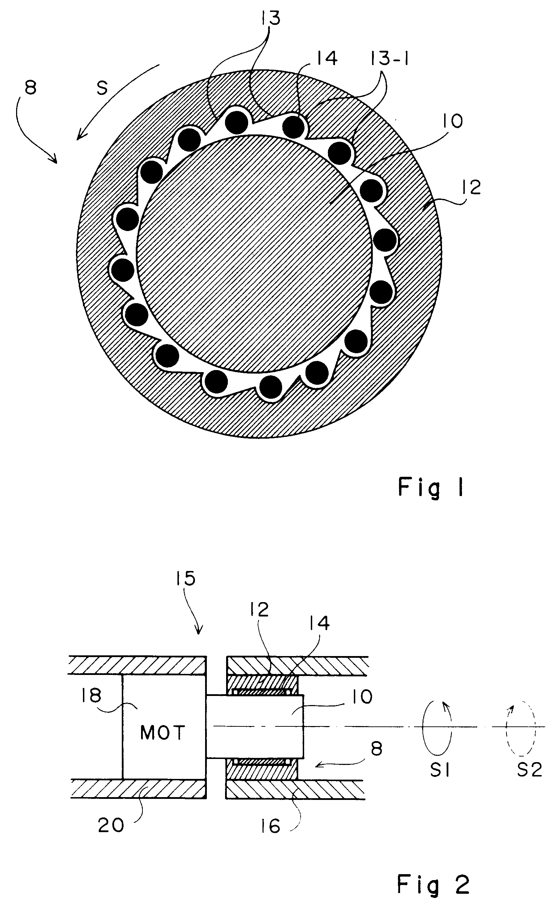

La figure 1 représente une roue libre classique 8. Elle comprend un axe cylindrique interne 10 entouré d'une bague externe 12. L'intérieur de la bague 12 comprend une multitude de rampes 13 de même sens dont chacune part d'un endroit proche de l'axe 10 et s'éloigne de celui-ci, dans le sens horaire à la figure 1. A chaque rampe est associé un rouleau 14 dont le diamètre est légèrement inférieur à la distance séparant la circonférence de l'axe 10 de la partie la plus éloignée de la rampe. En outre, comme cela est représenté, chaque rampe se termine par un arrondi 13-1 épousant le rouleau 14 associé.

Le fonctionnement de cette roue libre est le suivant. On suppose que l'axe 10 est fixe. Si la bague 12 est entraînée en rotation dans le sens horaire, les rampes 13 se mettent à rouler sur les rouleaux 14 à la façon d'un roulement à billes. Pratiquement immédiatement, selon le jeu des rouleaux 14, le diamètre du rouleau 14 devient inférieur à l'espace séparant la circonférence de l'axe 10 des rampes 13 ; les rouleaux 14 se coincent et empêchent toute rotation supplémentaire de la bague 12 dans le sens horaire. Le blocage de la roue libre s'effectue rapidement, de sorte que la rotation effectuée par la bague 12 dans le sens horaire (le sens non-libre) est négligeable.

Par contre, si la bague 12 est entraînée dans le sens anti-horaire, ce qui est indiqué par une flèche S, les rouleaux 14 sont repoussés au fond des rampes 13 où ils peuvent rouler librement.

Il existe bien entendu d'autres types de roue libre, par exemple à cliquets, mais qui présentent l'inconvénient d'autoriser une certaine rotation dans le sens non-libre avant leur blocage.

Une solution classique pour réaliser une roue libre débrayable consiste à prévoir un embrayage permettant d'accoupler, par exemple, l'axe 10 de la roue libre à une pièce ou de désaccoupler cet axe. Si l'axe est désaccouplé, la pièce peut tourner dans n'importe quel sens par rapport à la bague 12 de la roue libre. Si l'axe est accouplé, la pièce ne peut tourner que dans le sens libre.

Un tel système d'embrayage présente toujours un jeu de fonctionnement entre la position accouplée et la position désaccouplée, ce qui introduit des temps de réponse élevés et des claquements bruyants. Un temps de réponse élevé à l'embrayage (au blocage) est dangereux pour un robot chirurgical. Lorsqu'un axe du robot atteint une position angulaire limite, il doit être arrêté (par son accouplement à une roue libre correspondante). Si le temps de réponse à l'accouplement est élevé, la limite risque d'être franchie avant que l'axe n'ait pu être arrêté.

De plus, l'arrêt de l'axe est particulièrement brusque si l'on veut respecter une certaine précision ; il est difficile de prévoir un ralentissement par friction qui entraînerait une position d'arrêt incertaine dépendant de l'énergie fournie à l'axe.

Un objet de la présente invention est de prévoir une roue libre débrayable à temps de réponse court.

Un autre objet de la présente invention est de prévoir une telle roue libre débrayable qui permette en outre une limitation de la vitesse de rotation dans le sens opposé au sens libre.

Un autre objet de la présente invention est de prévoir une telle roue libre débrayable à l'aide de laquelle on puisse obtenir un arrêt progressif.

Ces objets sont atteints grâce à une combinaison d'un moteur et d'une roue libre pour constituer une roue libre débrayable, selon la revendication 1. Ladite roue libre débrayable comprend une première et une deuxième pièce dont la deuxième ne peut tourner que dans un sens libre prédéterminé par rapport à la première. La roue libre comprend en outre des moyens d'entraînement de la première pièce en rotation dans le sens opposé au sens prédéterminé, d'où il résulte que la deuxième pièce peut tourner au plus aussi vite que la première pièce dans le sens opposé au sens prédéterminé.

Selon un mode de réalisation de la présente invention, la deuxième pièce est une bague et la première un axe central sur lequel la bague est bloquable en rotation par un système à rampes et rouleaux.

Selon un mode de réalisation de la présente invention, la première pièce est entraînée par un système à vis sans fin.

La présente invention vise également une articulation comprenant deux roues libres du type susmentionné, coaxiales et à sens libres opposés. Les deuxièmes pièces de chaque roue libre sont solidaires d'un premier élément de l'articulation et les moyens d'entraînement sont des groupes moto-réducteurs solidaires d'un deuxième élément de l'articulation.

Ces objets, caractéristiques et avantages ainsi que d'autres de la présente invention seront exposés en détail dans la description suivante de modes de réalisation particuliers faite à titre non-limitatif à l'aide des figures jointes parmi lesquelles :
la figure 1, précédemment décrite, représente une roue libre non débrayable classique ;
la figure 2 représente un mode de réalisation de roue libre débrayable selon la présente invention ;
la figure 3 illustre une application d'une roue libre débrayable selon l'invention à une articulation de robot ; et
les figures 4A et 4B représentent deux vues d'un système d'entraînement irréversible pouvant être utilisé dans une roue libre selon l'invention.

Selon l'invention, pour rendre débrayable une roue libre telle que celle de la figure 1, on prévoit d'entraîner, soit l'axe 10, soit la bague 12, en rotation dans son sens libre. Ainsi, quelle que soit la vitesse de rotation de la pièce entraînée (10 ou 12), l'autre pièce n'est pas entraînée. Ceci garantit la sécurité du système lorsqu'il est utilisé dans un robot médical qui ne doit en aucun cas présenter des mouvements incontrôlés dûs à une mauvaise commande d'un actionneur (moteur). Dans les exemples décrits ci-après, on suppose que l'on entraîne l'axe 10, dans le sens horaire si l'on se réfère à la figure 1. Dans ce cas, la bague 12 peut tourner dans le sens horaire au plus aussi vite que l'axe 10. En effet, tant que la bague 12 ne tourne pas aussi vite que l'axe 10, elle tourne, relativement à l'axe 10, dans le sens libre.

La figure 2 représente un mode de réalisation de roue libre débrayable 15 selon l'invention. La bague 12 d'une roue libre 8 du type de la figure 1 est solidaire d'une pièce 16. La bague 12 peut être encastrée ou bien immobilisée en rotation et en translation par rapport à la pièce 16 par des moyens classiques. L'axe 10 de la roue libre est solidaire de l'axe de sortie d'un groupe moto-réducteur 18. Le châssis du groupe 18 est solidaire d'une pièce 20. Ainsi, si le groupe 18 est à l'arrêt, on se trouve dans la situation d'une roue libre classique et la pièce 16 ne peut tourner par rapport à la pièce 20 que dans le sens libre, ce qui est représenté par une flèche pleine S1. (On suppose que l'axe du groupe 18 à l'arrêt ne peut être entraîné en rotation par une action externe.)

Par contre, si l'axe 10 est entraîné dans son sens libre par le groupe 18, la pièce 16 peut tourner par rapport à la pièce 20 dans son sens non-libre au plus aussi vite que l'axe 10, ce qui est représenté par une flèche en pointillés S2. Bien entendu, la pièce 16 peut toujours tourner dans son sens libre.

Ce qui précède montre que le groupe 18 joue non seulement le rôle de système de débrayage mais aussi de limiteur de vitesse dans le sens non-libre de la bague 12.

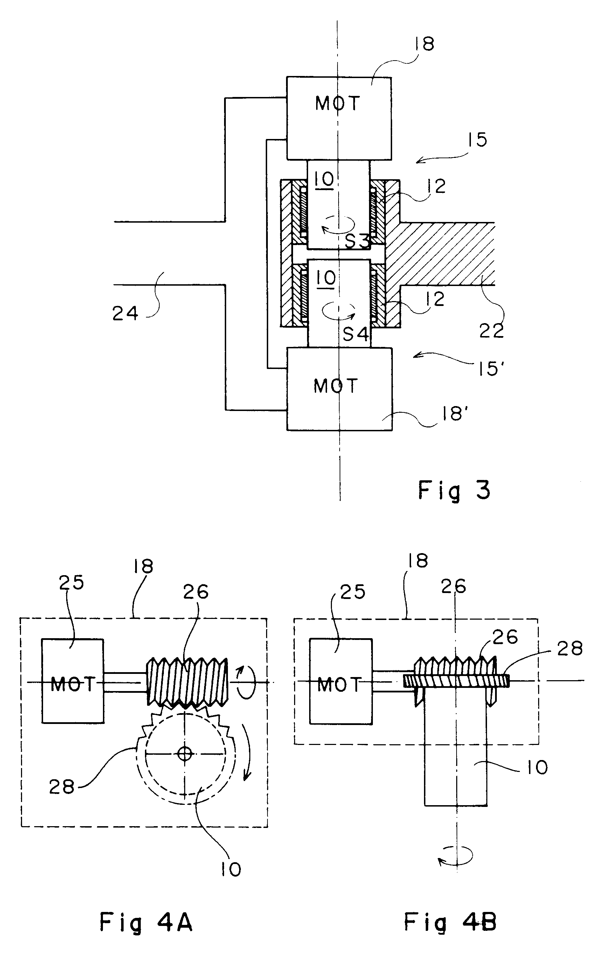

La figure 3 représente une application de deux roues libres selon l'invention à une articulation, de bras de robot par exemple. Les bagues 12 de deux roues libres 15 et 15' du type de la figure 2 sont solidaires d'un premier segment 22 du bras du robot. Les deux roues libres 15 et 15' sont coaxiales et à sens libres opposés, indiqués par des flèches S3 et S4. Les axes 10 des roues libres 15 et 15' sont solidaires des axes de sortie de deux groupes moto-réducteurs respectifs 18 et 18'. Les châssis des groupes 18 et 18' sont solidaires d'un même deuxième segment 24 du bras du robot. Les groupes 18 et 18' sont bien entendu prévus pour entraîner leurs axes 10 dans leurs sens libres respectifs.

Ainsi, si les deux groupes 18 et 18' sont à l'arrêt, le segment 22 ne peut bouger par rapport au segment 24, chaque sens de déplacement étant bloqué par l'une des roues libres 15 et 15'. Si l'un des groupes 18 et 18' est mis en route, le segment 22 ne peut se déplacer que dans le sens de l'axe 10 entraîné en rotation et au plus aussi vite que celui-ci. La roue libre dont l'axe 10 n'est pas entraîné empêche tout déplacement du segment 22 dans le sens inverse.

Maintenant, si les deux groupes 18 sont mis en route, le segment 22 peut se déplacer dans n'importe quel sens, mais au plus aussi vite que l'axe 10 associé au sens de déplacement.

Une roue libre débrayable selon l'invention, utilisée dans un système comprenant des capteurs de position, tel qu'un bras de robot, fournit un blocage à la fois progressif et précis. En effet, si un segment de bras de robot s'approche d'une position limite, ce qui est détecté par un capteur de position, le groupe moto-réducteur associé peut être asservi pour réduire progressivement sa vitesse de manière à atteindre une vitesse nulle au moment où le segment atteint sa position limite.

Lorsque cette position est atteinte, le groupe moto-réducteur est arrêté et le segment reste bloqué par les deux roues libres qui empêchent les déplacements du segment dans un sens et dans le sens inverse, respectivement.

Dans la description qui précède, on a supposé que la vitesse de rotation d'un groupe moto-réducteur était indépendante de toute action externe sur son axe de sortie 10.

Pour cela, on peut par exemple prévoir un moteur pas à pas entraînant l'axe 10 par un réducteur à rapport suffisamment élevé pour que le couple transmissible au moteur par l'axe 10 soit inférieur à son couple rémanent.

Les figures 4A et 4B représentent une vue de dessus et de côté d'un groupe moto-réducteur 18 particulièrement adapté à une roue libre débrayable selon l'invention. Ce groupe comprend un réducteur dit "à vis sans fin". Un moteur de type quelconque 25 entraîne une vis 26. La vis 26 agit sur une roue dentée 28 à axe perpendiculaire à celui de la vis. Cette roue dentée 28 est solidaire de l'axe 10 d'une roue libre.

Lorsque le pas de la vis 26 est choisi suffisamment petit, le réducteur devient irréversible, c'est-à-dire que l'on ne peut faire tourner le moteur 25 en agissant sur l'axe 10, quel que soit l'effort appliqué sur l'axe 10.

Lorsque l'on utilise un tel système à vis sans fin, la carcasse du moteur 25 est solidaire d'un châssis qui comporte également des paliers de guidage de l'axe 10 et de la vis 26.

De nombreuses variantes et modifications de la présente invention apparaîtront à l'homme du métier, notamment en ce qui concerne le choix des solutions mécaniques de montage des éléments. L'invention s'applique à tout type de roue libre classique et à n'importe quel type d'articulation, que ce soit une articulation en rotation ou une articulation en translation.

## Revendications

1. Combinaison d'un moteur (18) et d'une roue libre (8) pour constituer une roue libre débrayable, la roue libre (8) comprenant une première (10) et une deuxième (12) pièce ne pouvant tourner l'une par rapport à l'autre que dans un sens libre, le moteur (18) étant solidaire d'une troisième pièce (20) et disposé pour, en marche, entraîner la première pièce (10) en rotation seulement dans son sens libre par rapport à la deuxième pièce (12), et pour, à l'arrêt, maintenir la première pièce (10) bloquée par rapport à la troisième pièce (20).

2. Combinaison selon la revendication 1, caractérisée en ce que la deuxième pièce est une bague (12) et la première un axe central (10) sur lequel la bague est bloquable en rotation par un système à rampes (13) et rouleaux (14).

3. Combinaison selon la revendication 1, caractérisée en ce que la première pièce (10) est entraînée par un système à vis sans fin (26, 28).

4. Articulation caractérisée en ce qu'elle comprend deux roues libres débrayables (15, 15') coaxiales selon la revendication 1 à sens libres opposés, les deuxièmes pièces (12) de chaque roue libre étant solidaires d'un premier élément (22) de l'articulation et les moteurs (18, 18') étant solidaires d'un deuxième élément (24) de l'articulation constituant ladite troisième pièce.

## Claims

1. A combination of a motor (18) and a free wheel (8) to form a disengageable free wheel (8) including a first (10) and a second (12) part, that can rotate only in a free direction one relative to the other, the motor (18) being fixed to a third part (20), and being operative when powered, to rotate the first part (10) only in its free direction with respect to the second part (12) and, when still, to maintain said first part (10) blocked with respect to the third part (20).

2. The combination of claim 1, characterized in that the second part is a ring (12) and the first part is a central shaft (10) on which the ring is blockable in rotation by a ramp (13) and roller (14) system.

3. The combination of claim 1, characterized in that said first part (10) is rotated by a worm gear (26, 28).

4. An articulation characterized in that it includes two coaxial free wheels (15, 15') according to claim 1, with opposite free directions, the second parts (12) of each free wheel being integral with a first element (22) of the articulation, and the motors (18, 18') being integral with a second element (24) of the articulation forming said third part.

## Patentansprüche

1. Kombination aus einem Motor (18) und einem Freilauf (8) zum Bilden eines entkuppelbaren Freilaufes (8) mit einem ersten Bauteil (10) und einem zweiten Bauteil (12), die relativ zueinander nur in einer Richtung umlaufen können, wobei der Motor (18) mit einem dritten Bauteil (20) fest verbunden ist und in eingeschaltetem Zustand wirksam ist, um das erste Bauteil (10) nur in der Freilaufrichtung relativ zum zweiten Bauteil (12) zu verdrehen und im Ruhezustand das erste Bauteil (10) bezüglich des dritten Bauteils (20) blockiert zu halten.

2. Kombination nach Anspruch 1, **dadurch gekennzeichnet,** daß das zweite Bauteil ein Ring (12) und das erste Bauteil eine zentrale Welle (10) sind, auf welcher der Ring gegen Verdrehen mittels eines Rampen- und Rollensystems (13, 14) blockierbar ist.

3. Kombination nach Anspruch 1, **dadurch gekennzeichnet,** daß das erste Bauteil (10) mittels eines Schneckengetriebes (26, 28) verdrehbar ist.

4. Gelenk, dadurch gekennzeichnet, daß es zwei koaxiale, entkuppelbare Freiläufe (15, 15') gemäß Anspruch 1 mit entgegengesetzten Freilaufdrehrichtungen aufweist, wobei die zweiten Bauteile (12) jedes Freilaufes fest mit einem ersten Element (22) des Gelenkes und die Motoren (18, 18') fest mit einem zweiten, das dritte Bauteil des Gelenkes bildenden Element (24) verbunden sind.
